# EUROPEAN PATENT SPECIFICATION

(11) **EP 3 771 925 B1**
(45) Date of publication and mention of the grant of the patent: **12.06.2024**
(21) Application number: 19189348.6
(22) Date of filing: 31.07.2019
(51) Int. Cl.: H05B 47/105, H05B 47/19, G01S 13/04

(54) **LUMINAIRE AND LIGHTING TRUNKING SYSTEM WITH RFID ANTENNA**
LEUCHTE UND LICHTBANDSYSTEM MIT RFID-ANTENNE
LUMINAIRE ET SYSTÈME DE GOULOTTE D'ÉCLAIRAGE AVEC ANTENNE RFID

(43) Date of publication of application: 03.02.2021
(73) Proprietor: Zumtobel Lighting GmbH, 6850 Dornbirn (AT)
(72) Inventor: Angelow, Michail, 02300 Espoo (FI)
(74) Representative: Rupp, Christian

(56) References cited:
- WO-A1-2008/084682
- US-A1- 2010 296 285
- US-A1- 2019 213 368
- US-B2- 7 609 163

## Description

### TECHNICAL FIELD OF THE INVENTION

The invention relates to a luminaire and lighting trunking system and lighting trunking system, preferably for indoor applications. The invention further relates to a method for operating the luminaire and lighting trunking system and lighting trunking system.

### BACKGROUND OF THE INVENTION

Radio frequency identification (RFID) systems are currently the most widely used technology for tracking assets. The system is expensive on infrastructure but very cheap on tags.

RFID is used in different applications in order to provide unique identification codes related with a set of particular items. These items may comprise products in a store or pallets in a warehouse, persons in a race, pets, racehorses, farm animals, cars passing a tollbooth or entering a parking lot, etc.

Usually, singular RFID "tags" are attached to each item where each tag comprises a "chip" encoding digital identification data and an antenna that can communicate wirelessly to an RFID "reader." In some cases "passive" tags are used, where the power necessary to receive a query and transmit identification data back to the reader is also provided via the wireless connection.

In some cases use is made of "active" tags which incorporate batteries to provide a higher power signal that can be read from greater distances.

RFID systems have been implemented over a wide range of radio frequencies. Common embodiments exist using frequencies near 100 kHz, 10 MHz, and various UHF frequencies (100s of MHz to a few GHz). The choice of the range of frequencies is dictated on the one hand by available radio bands not designated for other applications and on the other hand by the performance needs of particular applications.

Most of production, logistics and retails systems make use of such tags.

US 2019/213368 A1 discloses a luminaire and lighting system comprising an RFID controller designed to process signals in a detection area of an RFID antenna of the system and detected by the RFID antenna.

WO 2008/084682 A1 discloses a system comprising an RFID controller designed to process signals reflected by objects in a detection area of an RFID antenna of the system and detected by the RFID antenna as object presence or motion information. The processing includes extraction of ID information of an RFID tag.

US 7609163 B2 discloses a motion detection method that utilizes the detection of Doppler signals within an RFID interrogation zone.

However, traditional RFID solutions are expensive for the infrastructure and implementation and do not match the expectations.

Thus, there is a need for an improved RFID system, using the luminaire and lighting trunking system and the lighting trunking system as location, power and data transmission points for RFDI signals.

### SUMMARY OF THE INVENTION

The object of the present invention is achieved by the solution provided in the enclosed independent claims. Advantageous implementations of the present invention are further defined in the dependent claims.

The invention relates to a luminaire and lighting trunking system, comprising a housing, at least one lighting module, a control unit controlling the operation of the lighting module, a RFID antenna integrated in the luminaire and lighting trunking system, as well as a RFID controller, designed to process signals reflected by objects in the detection area of the RFID antenna and detected by the RFID antenna as object presence or motion information, the processing not being the extraction of ID information of an RFID tag, according to claim 1.

Therefore, the reflected RFID signals by all other objects under the antenna system, can be analyzed not only for RFID tags, but also for all other useful information, such as reflection from furniture and other building or decoration elements.

This provides the advantage that the presence of objects or people can be detected in an efficient way.

Moreover, additionally to the normal operation of the RFID system, the invention relates also to the analysis and usage of data derived from the reflected RFID signal not only from the RFID tags, but also reflected from all other objects under the radio propagation and reflection pattern. As such, the total information gain from the system is dramatically increased and the method can be used to support various use case, as described below.

The lighting trunking systems are well known in the prior art and they are provided by different providers. For example, LED linear trunking systems are continuous-row lighting assemblies that utilize trunking rails in order to integrate individual lighting fixtures which may include LED light modules, power supplies, lighting controls, and emergency battery packs. The flexible trunking systems can be configured in different ways in order to meet challenging demands for interior lighting in commercial and industrial buildings.

In an implementation for of the luminaire and lighting trunking system according to the first aspect, the presence or motion information is communicated over a wireless or wire-bound interface of the luminaire and lighting trunking system. This provides the advantage that the communication process of the presence of motion is faster and more efficient.

According to the invention, the presence or motion information is used by the control unit for the control of the operation of the lighting module such that at least one lighting characteristic, such as e.g. the intensity of the light produced by the lighting module is a function of the presence or motion information.

In an implementation for of the luminaire and lighting trunking system according to the first aspect, the RFID controller is a controller separate to the control unit controlling the operation of the lighting module.

In an implementation for of the luminaire and lighting trunking system according to the first aspect, the RFID controller is additionally designed to process signals detected by the RFID antenna in order to extract an RF ID sent from a RFID tag.

In an implementation for of the luminaire and lighting trunking system according to the first aspect, the RFID antenna is integrated in the housing of the luminaire and lighting trunking system.

In an implementation of the luminaire and lighting trunking system according to the first aspect, the luminaire and lighting trunking system is a LED luminaire and lighting trunking system.

In an implementation of the luminaire and lighting trunking system according to the first aspect, the lighting module comprises a LED-driver.

According to a second aspect, the invention relates to a method for operating a luminaire and lighting trunking system, comprising controlling an operation of a lighting module in response to non-ID information of RFID signals emitted by a RFID controller of a luminaire and lighting trunking system and reflected by objects according to claim 8.

According to a third aspect, the invention relates to the use of non-ID information of RFID signals emitted by a RFID controller of a luminaire and lighting trunking system and reflected by objects for controlling at least one light output characteristic of the luminaire and lighting trunking system according to claim 9.

### BRIEF DESCRIPTION OF THE DRAWINGS

The invention will be explained in the followings together with the figures.
- Fig. 1: shows a luminaire and lighting trunking system according to the invention;
- Fig. 2: shows an RFID system according to an embodiment;
- Fig. 3: shows an RFID antenna system according to an embodiment;
- Fig. 4: shows an antenna system comprising a luminaire and lighting trunking system according to an embodiment; and
- Fig. 5: shows a method for operating a luminaire and lighting trunking system according to an embodiment.

### DETAILED DESCRIPTION OF THE PREFERRED EMBODIMENTS

Aspects of the present invention are described herein in the context of a luminaire and lighting trunking system.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of a luminaire and lighting trunking system will be presented. However, as those skilled in the art will readily appreciate, these aspects may be extended to aspects of luminaire and lighting trunking systems without departing from the invention.

The term "LED luminaire and lighting trunking system" shall mean a luminaire and lighting trunking system with a light source comprising one or more LEDs. LEDs are well-known in the art, and therefore, will only briefly be discussed to provide a complete description of the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

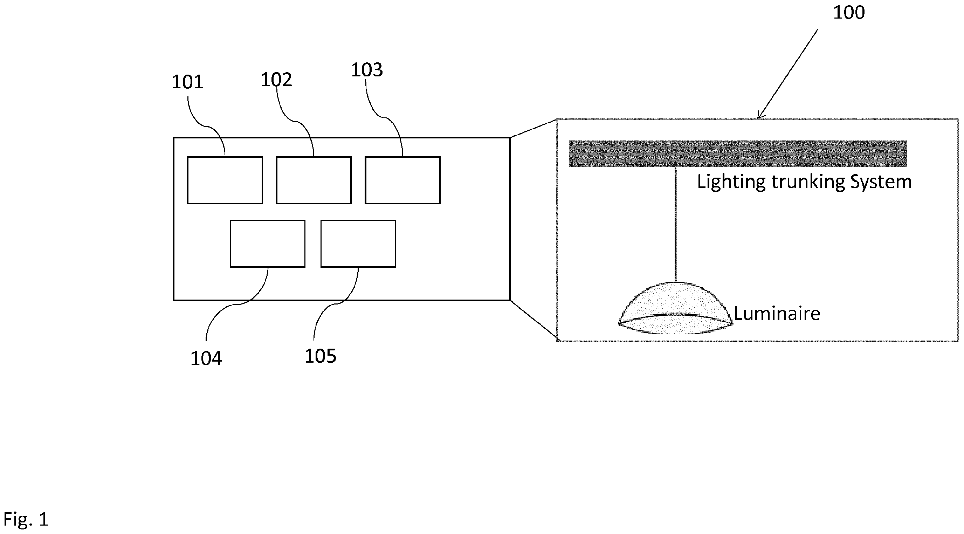

Fig. 1 shows a luminaire and lighting trunking system 100 according to the invention.

The luminaire and lighting trunking system 100, comprises a housing 101, at least one lighting module 102, a control unit 103 controlling the operation of the lighting module 102, a RFID antenna 104 integrated in the luminaire and lighting trunking system, as well as a RFID controller 105, designed to process signals reflected by objects or human beings 106 in the detection area of the RFID antenna and detected by the RFID antenna 104 as object presence or motion information, the processing not being the extraction of ID information of an RFID tag.

The luminaire and lighting trunking system 100 can be a LED luminaire and lighting trunking system.

Advantageously, the RFID antennas are integrated within the luminaire and lighting trunking systems 100 allowing better output power and sensitivity.

The data or signals can be carried over the luminaire and lighting trunking system data network.

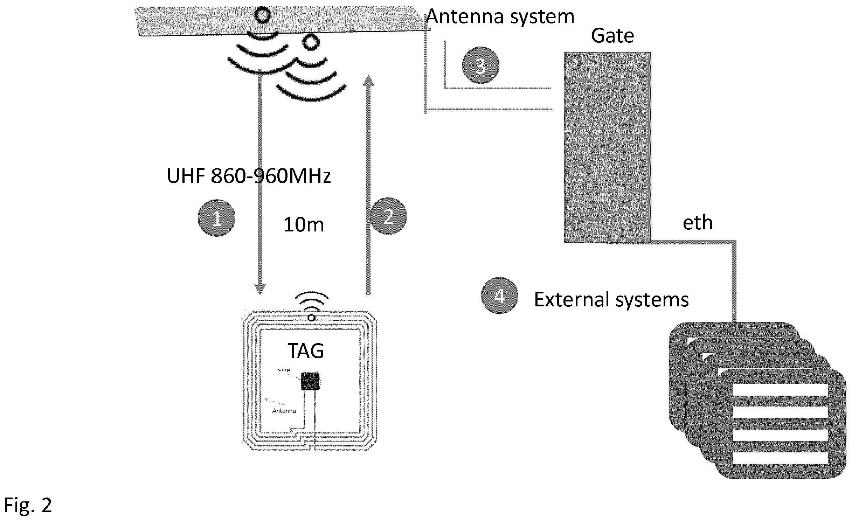

Fig. 2 shows an RFID system according to an embodiment.

In this embodiment, in step 1, the RFID emits a UHF signal, via the antenna system, which UHF signal is reflected by an object 106, such as a human, without RFID tag.

In step 2, the object reflects part of the signal back to the reader.

In step 3, the antenna system captures the reflected signal and the RFID gate extracts from the signal motion, area topography and/or presence information, which information is obtained additionally to the ID modulated by the tag into the reflected signal, and sends the received data for further processing.

However, the ID information may be extracted in addition to the motion and/or presence information. According to the invention at least the non-ID content of the reflected signal is evaluated.

The motion/presence information can be used for sending it out over a wireless or wire-bound link. Alternatively or additionally it can be used to control the light output of the lighting module 102 of the luminaire and lighting trunking system 100, detect changes in topography, detect people movement and others.

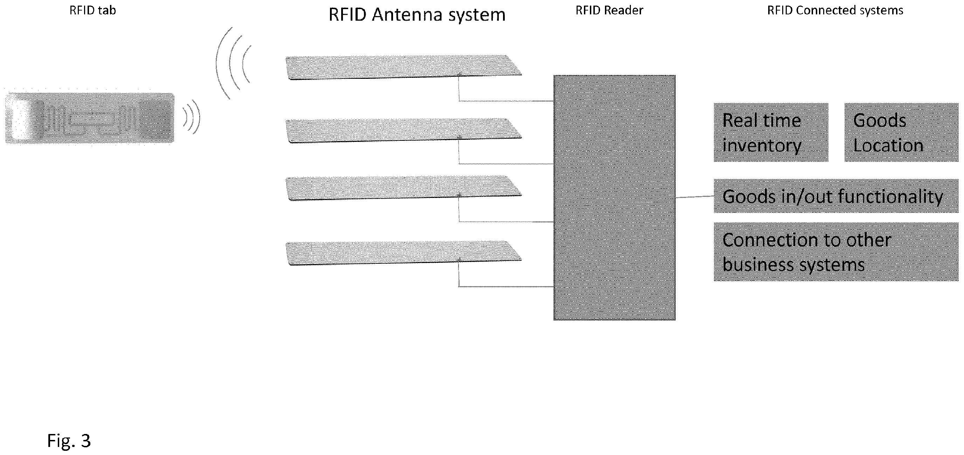

Fig. 3 shows an RFID antenna system according to an embodiment.

Similarly to Fig. 2, in this case as well the RFID antenna system can send a UHF signal to an object 106. Then, the antenna system can detect the reflected signal and the RFID reader can interpret the signal and, finally, send the received data for further processing to a RFID system.

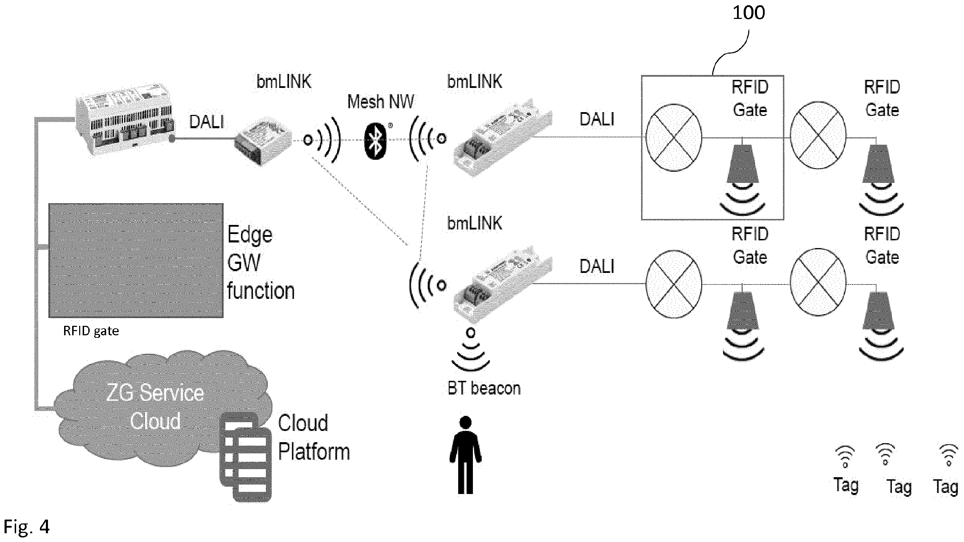

Fig. 4 shows an antenna system integrated in the housing of a luminaire and lighting trunking system 100 according to the invention.

The luminaire and lighting trunking system 100 can comprise the RFID controller 105 which can be designed to process signals reflected by objects or human beings 106 in the detection area of the RFID antenna and detected by the RFID antenna 104 as object presence or motion information, the processing not being the extraction of ID information of an RFID tag.

The RFID antenna 104 can be integrated in the housing 101 of the luminaire and lighting trunking system 100.

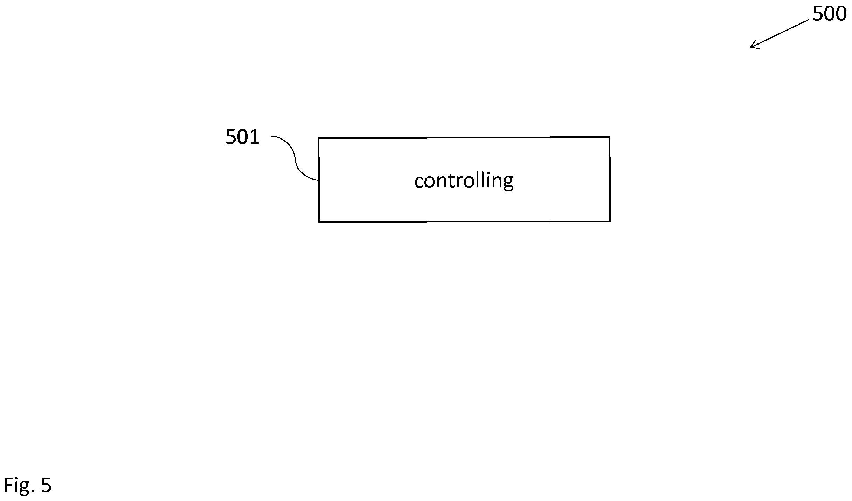

Fig.5 shows a method 500 for operating a luminaire and lighting trunking system 100 according to an embodiment.

In this embodiment, the RFID antenna system is used as an UHF radar. In particular, the UHF can be used as a radar scanner, since the reflected signal can be analyzed for topography information and change to previous state.

The method 500 comprises the following step:
- controlling 501 an operation of a lighting module 102 in response to non-ID information of RFID signals emitted by a RFID controller 105 of a luminaire and lighting trunking system 100 and reflected by objects.

All features of all embodiments described, shown and/or claimed herein can be combined with each other.

While various embodiments of the present invention have been described above, it should be understood that they have been presented by way of example only and not limitation. Thus, the breadth and scope of the present invention should not be limited by any of the above-described embodiments. Rather, the scope of the invention should be defined in accordance with the following claims and their equivalence.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

## Claims

1. Luminaire and lighting trunking system (100), comprising:
- a housing (101),
- at least one lighting module (102),
- a control unit (103) controlling the operation of the lighting module (102),
- a RFID antenna (104) integrated in the luminaire and lighting trunking system (100), **characterized by** - an RFID controller (105), designed to process signals reflected by objects in the detection area of the RFID antenna (104) and detected by the RFID antenna (104) as object presence or motion information, the processing not being the extraction of ID information of an RFID tag, wherein the control unit (103) is adapted to use the object presence or motion information for the control of the operation of the lighting module (2) such that at least one lighting characteristic, such as e.g. the intensity of the light produced by the lighting module is a function of the object presence or motion information.

2. Luminaire and lighting trunking system (100) according to claim 1, further comprising a wireless or wire-bound interface which is adapted to communicate the object presence or motion information.

3. The luminaire and lighting trunking system (100) of any of the preceding claims, wherein the RFID controller (105) is a controller separate to the control unit (103) controlling the operation of the lighting module (102).

4. The luminaire and lighting trunking system (100) of any of the preceding claims, wherein
the RFID controller (105) is additionally designed to process signals detected by the RFID antenna (104) in order to extract an RF ID sent from a RFID tag and other signals reflected by the surrounding environment.

5. The luminaire and lighting trunking system (100) of any one of the preceding claims, wherein
the RFID antenna (104) is integrated in the housing (101) of the luminaire and lighting trunking system (100).

6. The luminaire and lighting trunking system (100) of any one of the preceding claims, wherein
the luminaire and lighting trunking system (100) is a LED luminaire and lighting trunking system.

7. The luminaire and lighting trunking system (100) of claim 6, wherein
the lighting module (102) comprises a LED-driver.

8. Method (500) for operating a luminaire and lighting trunking system (100), comprising:
- controlling (501) an operation of a lighting module (102) in response to non-ID information of RFID signals emitted by a RFID controller (105) of a luminaire and lighting trunking system (100) and reflected by other objects than RFID tags.

9. Use of non-ID information of RFID signals emitted by a RFID controller (105) of a luminaire and lighting trunking system (100) and reflected by objects for controlling at least one light output characteristic of the luminaire and lighting trunking system (100).

## Patentansprüche

1. Leuchten- und Beleuchtungsbandsystem (100), umfassend:
- ein Gehäuse (101),
- mindestens ein Beleuchtungsmodul (102),
- eine Steuereinheit (103), die den Betrieb des Beleuchtungsmoduls (102) steuert,
- eine RFID-Antenne (104), die in das Leuchten- und Beleuchtungsbandsystem (100) integriert ist, **gekennzeichnet durch** - eine RFID-Steuerung (105), die ausgelegt ist, um Signale, die durch Objekte in dem Erfassungsbereich der RFID-Antenne (104) reflektiert und von der RFID-Antenne (104) erfasst werden, als Objektanwesenheits- oder -bewegungsinformationen zu verarbeiten, wobei das Verarbeiten nicht die Gewinnung von ID-Informationen eines RFID-Tags ist, wobei die Steuereinheit (103) angepasst ist, um die Objektanwesenheits- oder -bewegungsinformationen für die Steuerung des Betriebs des Beleuchtungsmoduls (2) derart zu verwenden, dass mindestens eine Beleuchtungseigenschaft, wie z. B. die Intensität des Lichts, die von dem Beleuchtungsmodul erzeugt wird, eine Funktion der Objektanwesenheits- oder Bewegungsinformation ist.

2. Leuchten- und Beleuchtungsbandsystem (100) nach Anspruch 1, ferner umfassend eine drahtlose oder drahtgebundene Schnittstelle, die angepasst ist, um die Objektanwesenheits- oder Bewegungsinformationen zu kommunizieren.

3. Leuchten- und Beleuchtungsbandsystem (100) nach einem der vorstehenden Ansprüche, wobei
die RFID-Steuerung (105) eine von der Steuereinheit (103) getrennte Steuerung ist, die den Betrieb des Beleuchtungsmoduls (102) steuert.

4. Leuchten- und Beleuchtungsbandsystem (100) nach einem der vorstehenden Ansprüche, wobei
die RFID-Steuerung (105) zusätzlich ausgelegt ist, um Signale, die durch die RFID-Antenne (104) erfasst werden, zu verarbeiten, um eine RFID, die von einem RFID-Tag gesendet wird, und andere Signale, die durch die Umgebung reflektiert werden, zu extrahieren.

5. Leuchten- und Beleuchtungsbandsystem (100) nach einem der vorstehenden Ansprüche, wobei
die RFID-Antenne (104) in dem Gehäuse (101) des Leuchten- und Beleuchtungsbandsystems (100) integriert ist.

6. Leuchten- und Beleuchtungsbandsystem (100) nach einem der vorstehenden Ansprüche, wobei
das Leuchten- und Beleuchtungsbandsystem (100) ein LED-Leuchten- und Beleuchtungsbandsystem ist.

7. Leuchten- und Beleuchtungsbandsystem (100) nach Anspruch 6, wobei
das Beleuchtungsmodul (102) einen LED-Treiber umfasst.

8. Verfahren (500) zum Betreiben eines Leuchten- und Beleuchtungsbandsystems (100), umfassend:
- Steuern (501) eines Betriebs eines Beleuchtungsmoduls (102) als Reaktion auf Nicht-ID-Informationen von RFID-Signalen, die durch eine RFID-Steuerung (105) eines Leuchten- und Beleuchtungsbandsystems (100) emittiert und durch andere Objekte als RFID-Tags reflektiert werden.

9. Verwendung von Nicht-ID-Informationen von RFID-Signalen, die durch eine RFID-Steuerung (105) eines Leuchten- und Beleuchtungsbandsystems (100) emittiert und durch Objekte zum Steuern mindestens einer Lichtausgangseigenschaft des Leuchten- und Beleuchtungsbandsystems (100) reflektiert werden.

## Revendications

1. Luminaire et système de goulotte d'éclairage (100), comprenant :
- un logement (101),
- au moins un module d'éclairage (102),
- une unité de commande (103) commandant le fonctionnement du module d'éclairage (102),
- une antenne RFID (104) intégrée dans le luminaire et système de goulotte d'éclairage (100), **caractérisé par -** un contrôleur RFID (105), conçu pour traiter des signaux réfléchis par des objets dans la zone de détection de l'antenne RFID (104) et détectés par l'antenne RFID (104) en tant qu'informations de présence ou de mouvement d'objet, le traitement n'étant pas l'extraction d'informations ID d'une étiquette RFID, dans lequel l'unité de commande (103) est adaptée pour utiliser les informations de présence ou de mouvement d'objet pour la commande du fonctionnement du module d'éclairage (2) de telle sorte qu'au moins une caractéristique d'éclairage, telle que par exemple, l'intensité de la lumière produite par le module d'éclairage est une fonction des informations de présence ou de mouvement d'objet.

2. Luminaire et système de goulotte d'éclairage (100) selon la revendication 1, comprenant en outre une interface sans fil ou filaire qui est adaptée pour communiquer les informations de présence ou de mouvement d'objet.

3. Luminaire et système de goulotte d'éclairage (100) selon l'une quelconque des revendications précédentes, dans lequel
le contrôleur RFID (105) est un contrôleur séparé de l'unité de commande (103) commandant le fonctionnement du module d'éclairage (102).

4. Luminaire et système de goulotte d'éclairage (100) selon l'une quelconque des revendications précédentes, dans lequel
le contrôleur RFID (105) est en outre conçu pour traiter des signaux détectés par l'antenne RFID (104) afin d'extraire une RFID envoyée à partir d'une étiquette RFID et d'autres signaux réfléchis par le milieu environnant.

5. Luminaire et système de goulotte d'éclairage (100) selon l'une quelconque des revendications précédentes, dans lequel
l'antenne RFID (104) est intégrée dans le logement (101) du luminaire et système de goulotte d'éclairage (100).

6. Luminaire et système de goulotte d'éclairage (100) selon l'une quelconque des revendications précédentes, dans lequel
le luminaire et système de goulotte d'éclairage (100) est un luminaire et système de goulotte d'éclairage à DEL.

7. Luminaire et système de goulotte d'éclairage (100) selon la revendication 6, dans lequel
le module d'éclairage (102) comprend un pilote de DEL.

8. Procédé (500) de fonctionnement d'un luminaire et système de goulotte d'éclairage (100), comprenant :
- la commande (501) d'un fonctionnement d'un module d'éclairage (102) en réponse à des informations non ID de signaux RFID émis par un contrôleur RFID (105) d'un luminaire et système de goulotte d'éclairage (100) et réfléchis par d'autres objets que des étiquettes RFID.

9. Utilisation d'informations non ID de signaux RFID émis par un contrôleur RFID (105) d'un luminaire et système de goulotte d'éclairage (100) et réfléchis par des objets pour commander au moins une caractéristique de sortie de lumière du luminaire et système de goulotte d'éclairage (100).
